(19) Europäisches Patentamt

European Patent Office

Office européen des brevets

(11) Numéro de publication: **0 001 855**
A1

# (12) DEMANDE DE BREVET EUROPEEN

(21) Numéro de dépôt: 78200262.0

(22) Date de dépôt: 26.10.78

(51) Int. Cl.²: **B 60 C 25/06**

(30) Priorité: 03.11.77 BE 256391

(43) Date de publication de la demande:
16.05.79 Bulletin 79/10

(84) Etats contractants désignés:
CH DE FR GB NL SE

(71) Demandeur: DU QUESNE, Francis
Cleistraat 138
B-2630 Aartselaar(BE)

(72) Inventeur: DU QUESNE, Francis
Cleistraat 138
B-2630 Aartselaar(BE)

(74) Mandataire: Ottelohe, Jozef René
Bureau Ottelohe J.R. Postbus 3 Fruithoflaan 105
B-2500 Antwerpen (Berchem)(BE)

(54) Dispositif pour serrer une roue de motocyclette dont il y a lieu d'enlever un pneu ou sur laquelle un pneu doit être monté.

(57) L'invention se rapporte à un dispositif qu'on peut de préférence fixer entre les mâchoires du plateau d'un appareil pour le montage et le démontage de pneus d'automobiles, et au moyen duquel il est possible de fixer rapidement et sans peine une roue de motocyclette, sans que cette roue ne puisse être déformée ou endommagée.

Le dispositif consiste en la combinaison d'un plateau de base (1) qui est serré entre les mâchoires de l'appareil pour le montage et le démontage d'un pneumatique; d'un nombre de bras (2) appliqués sur le plateau de base (1) et dont les extrémités libres peuvent être déplacées pour se rapprocher et pour s'écarter; d'un mécanisme (3 à 9) appliqué entre ledit plateau de base (1) et les bras (2) en vue du déplacement manuel et le blocage desdits bras dans le but de serrer las roue; d'un porte-roue (10) appliqué sur l'extrémé libre de chacun des bras (2) et sur lesquels la roue à serrer est déposée horizontalement; et d'un tenon de serrage (11) monté sur l'extrémité libre de chaque bras (2), lesdits tenons de serrage pénétrant entre les rayons de la roue à serrer et étant pressées contre la face intérieure de la jante de roue en vue du serrage de ladite roue.

Fig. 2

- 1 -

Dispositif pour serrer une roue de motocyclette dont il y a lieu d'enlever un pneu ou sur laquelle un pneu doit être monté.

L'invention se rapporte à un dispositif qu'on peut de préférence fixer entre les mâchoires du plateau d'un appareil pour le montage et le démontage de pneus d'automobiles, et au moyen duquel il est possible de fixer rapidement et sans peine une roue de motocyclette, sans que cette roue ne puisse être déformée ou endommagée.

On connaît des appareils pour le montage et le démontage de pneus d'automobiles, où la roue d'automobile est fixée entre des mâchoires qui se déplacent radialement et qui font partie d'une table qu'on fait tourner le long des outils suspendus à un bras et destinés au montage et au démontage du pneu. Du fait que la roue d'une motocyclette est d'exécution plus légère que celle de la jante d'une roue d'auto, l'appareil précité ne convient pas pour la fixation d'une roue de motocyclette. Il est proposé comme solution de munir chaque mâchoire d'une deuxième mâchoire plus légère entre lesquelles on fixe alors la roue de motocyclette. Il subsiste cependant un inconvénient du fait que par suite du profil particulier d'un pneu de motocyclette et des bords relativement minces de la jante de roue, il faut exercer une pression verticale relativement élevée sur la roue pour amener un des bords extérieurs de cette jante entre les mâchoires du dispositif. Un autre inconvénient important est que les mâchoires qui sont déplacées radialement par le moteur du dispositif, exercent une pression relativement élevée sur la circonférence extérieure de la jante de roue, de sorte que celle-ci peut dans de nombreux cas être endommagée ou déformée.

En vue d'y remédier, on a réalisé conformément à la principale caractéristique de l'invention un dispositif qui consiste en la combinaison d'un plateau de base, que l'on serre entre les mâchoires d'un appareil pour le montage et le démontage de pneus d'automobiles, d'un nombre de bras appliqués sur le plateau de base et dont les extrémités libres peuvent être déplacées pour se rapprocher ou pour s'écarter, d'un mécanisme appliqué entre ledit plateau de base et les bras, en vue du déplacement et du blocage à la main desdits bras pour la fixation de la roue, d'un porte-roue appliqué sur l'extrémité libre de chaque bras sur lesquels on dépose horizontalement la roue à serrer, et d'un tenon de serrage prévu sur l'extrémité libre de chaque bras, lesdits tenons de serrage se plaçant entre les rayons de la roue à fixer et s'appliquant contre le côté intérieur de la jante en vue de la fixation de la roue.

Les portes-roue sur lesquels on dépose la roue assurent que celle-ci se place directement en bonne position, tandis que la disposition des tenons de serrage qui s'appliquent contre la face intérieure de la jante et le déplacement à la main et le blocage des bras avec les tenons de serrage, évitent que la roue ne puisse être endommagée ou déformée.

Conformément à une autre caractéristique de l'invention, les tenons de serrage sont exécutés de forme cylindrique et sont recouverts d'une matière élastique, telle que le cacutchouc par exemple, de sorte que la surface de contact entre la roue et les tenons de serrage se trouve réduite à un minimum et que la matière élastique exclut totalement que la jante de roue ne soit endommagée.

En utilisant, conformément à une autre caractéristique de l'invention, trois bras et trois tenons de serrage, dont deux tenons de serrage sont placés à une distance l'un de l'autre qui est supérieure à la distance entre ces tenons et le troisième tenon de serrage, les tenons pourront toujours être introduits entre les rayons d'une roue, indépendamment du nombre de rayons dont la roue est pourvue.

A titre d'exemple, sans le moindre caractère de limitation, une description plus détaillée est donnée ci-après d'une forme d'exécution préférée du dispositif conforme à l'invention. Cette description se réfère aux dessins annexés dans lesquels:

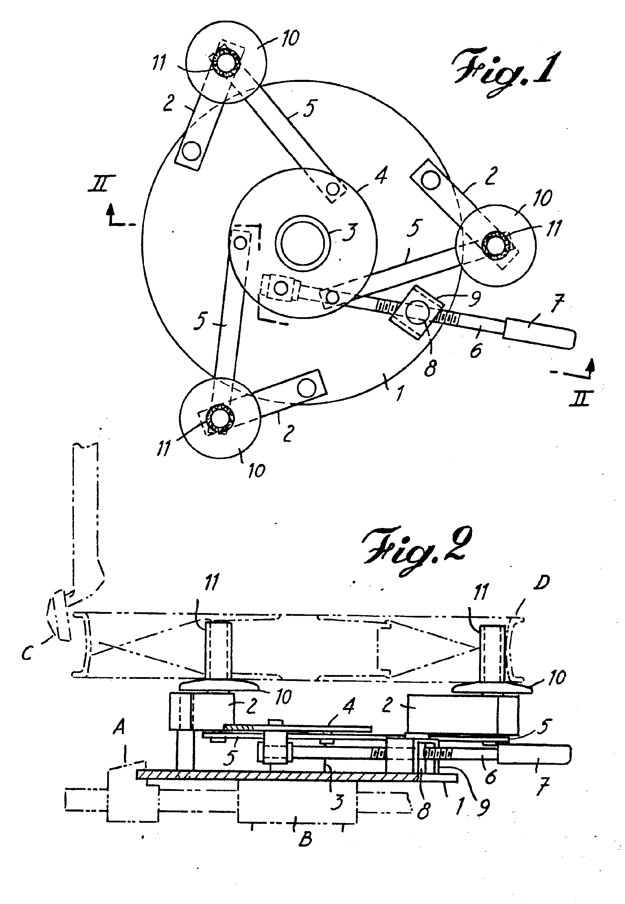

la fig. 1 représente une vue en plan du dispositif;

la fig. 2 représente une coupe transversale selon la ligne II-II à la figure 1.

Dans ces figures on remarque que le dispositif comporte un plateau de base circulaire 1 qui est serré entre les mâchoires A d'un appareil B pour l'enlèvement et le montage de pneus d'automobiles et dont l'outil C est également utilisé pour l'enlèvement et le montage du pneu d'une roue de motocyclette D. Le long de la circonférence dudit plateau de base 1, trois bras 2 se trouvent rattachés de manière pivotante par l'une de leurs extrémités. Au centre du plateau de base 1 il est monté un axe creux 3 autour duquel peut tourner un disque 4. Des bielles 5 raccordent chacun les bras 2 de manière articulée audit disque. Le disque 4 précité est également relié de manière pivotante à une tige filetée 6 que l'on peut faire tourner autour de son axe au moyen d'une poignée 7. Cette tige se visse dans un bloc 8 qui est fixé de manière pivotante dans un support 9 qui est rigidement fixé au plateau de base 1. L'extrémité libre de chaque bras 2 est pourvue d'un porte-roue 10 en forme de disque, pourvu d'une surface conique, sur lequel on dépose la roue qui doit être fixée. Chaque porte-roue 10 porte en son centre un tenon de serrage cylindrique montant 11, recouvert d'une matière élastique, telle que par exemple du caoutchouc, et dont la hauteur est approximativement égale à la largeur de la jante de roue d'une motocyclette. Deux de ces tenons de serrage se trouvent montés à une distance l'un de l'autre qui est supérieure à la distance de ces tenons au troisième tenon de serrage, de manière que les tenons de serrage puissent toujours être introduits entre les rayons d'une roue comportant un nombre quelconque de rayons

Pour la fixation de la roue, on fait tourner au moyen de la poignée 7 la tige filetée 6 autour de son axe, d'une manière telle que les bras 2 avec les tenons de serrage 11 se déplacent en se rapprochant, après quoi la roue peut aisément être placée sur les portes-roue 10, les tenons de serrage 11 se trouvant alors entre les rayons de roue. Ensuit on fait tourner la tige 6 autour de son axe dans le sens opposé, de manière à déplacer les bras 2 vers la jante de roue et que les tenons de serrage 11 soient pressées contre le côté intérieur de la jante de roue D. La roue se trouve alors fermement serrée sans pouvoir être déformée ou endommagée. Par la suite, le pneu peut être démonté de la roue, ou respectivement être monté sur celle-ci, de la manière connue au moyen de l'outil C, alors que le dispositif tout entier est entrainé en rotation de la manière bien connue par les mâchoires A de l'appareil B et par rapport à l'outil C précité.

Il est bien évident, que la forme, les dimensions et la disposition relative des éléments qui viennent d'être décrits peuvent varier, que certains de ces éléments pourraient être remplacés par d'autres qui poursuivent le même but et que le dispositif lui-même pourrait être complété par d'autres éléments qui en amélioreraient le fonctionnement pratique. De même, le dispositif pourrait former un ensemble avec l'outil pour le montage et le démontage d'un pneu d'une roue, sans qu'il ne faille faire usage d'un appareil pour le montage et le démontage d'un pneu d'automobile.

REVENDICATIONS

1.- Dispositif pour le serrage d'une roue de motocyclette, ce dispositif étant de préférence fixé entre les mâchoires d'un plateau entrainé en rotation d'un appareil pour le démontage et le montage de pneumatiques, caractérisé par le fait que le dispositif consiste en la combinaison d'un plateau de base (1) qui est serré entre les mâchoires de l'appareil pour le montage et le démontage d'un pneumatique; d'un nombre de bras (2) appliqués sur le plateau de base (1) et dont les extrémités libres peuvent être déplacées pour se rapprocher et pour s'écarter; d'un mécanisme (3 à 9) appliqué entre ledit plateau de base (1) et les bras (2) en vue du déplacement manuel et le blocage desdits bras dans le but de serrer la roue; d'un porte-roue (10) appliqué sur l'extrémité libre de chacun des bras (2) et sur lesquels la roue à serrer est déposée horizontalement; et d'un tenon de serrage (11) monté sur l'extrémité libre de chaque bras (2), lesdits tenons de serrage pénétrant entre les rayons de la roue à serrer et étant pressées contre la face intérieure de la jante de roue en vue du serrage de ladite roue.

2.- Dispositif selon la revendication 1, caractérisé par le fait qu'il se trouve fixé sur l'extrémité de chaque bras un porte-roue en forme de disque (10) avec surface portante conique, sur lequel se trouve monté verticalement un tenon de serrage cylindrique (11) recouvert d'une matière élastique.

3.- Dispositif selon la revendication 1, caractérisé par le fait que le dispositif comporte trois bras (2) et trois tenons de serrage (11), dont deux tenons de serrage (11) se trouvent à une distance l'un de l'autre qui est supérieure à la distance entre chacun de ces tenons et le troisième tenon de serrage.

Fig.1

Fig.2

0001855

0001855

**RAPPORT DE RECHERCHE EUROPEENNE**

Numero de la demande

EP 78 20 0262

| Catégorie | Citation du document avec indication, en cas de besoin, des parties pertinentes | Revendication concernée |
|---|---|---|
| | **DOCUMENTS CONSIDERES COMME PERTINENTS** | |
| | US - A - 2 439 615 (SMITH) <br> * Colonne 3, ligne 66 - colonne 4, ligne 15; figures 4,6 * | 1,2 |
| | US - A - 1 966 766 (RABY) <br> * Page 1, lignes 79-90; figures 1-4,6 * | 1,2 |
| | US - A - 2 948 314 (BISHMAN) <br> * Colonne 3, lignes 3-12; colonne 4, ligne 39 - colonne 5, ligne 46; figures 1,2,4,6-15 * | 1 |
| | US - A - 3 191 657 (LUND) <br> * Colonne 2, lignes 22-25; figure 1 * | 1 |
| | US - A - 4 034 786 (FELDMANN) <br> * Colonne 2, lignes 39-44; figures 1-4 * | 1 |
| | US - A - 3 918 509 (TROTTER) <br> * Colonne 1, lignes 21-32; figure 1 * | 1 |
| | US - A - 1 824 246 (VAN DAAM) <br> * Page 2, lignes 1-27; figures 1,2 * | 1 |

**CLASSEMENT DE LA DEMANDE (Int. Cl.²)**

B 60 C 25/06

**DOMAINES TECHNIQUES RECHERCHES (Int. Cl.²)**

B 60 C 25/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cite dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 05-02-1979 | AYTTER |

OEB Form 1503.1 06.78